# EUROPEAN PATENT APPLICATION

(11) **EP 2 387 226 A2**
(43) Date of publication of application: **16.11.2011**
(21) Application number: 11165888.6
(22) Date of filing: 12.05.2011
(51) Int. Cl.: H04N 5/225, H04N 5/33

(54) **Passive infrared imager**

(30) Priority: 13.05.2010 US 334490 P; 11.05.2011 US 105176
(71) Applicant: Honeywell International, Inc., Morristown, New Jersey 07962-2245 (US)
(72) Inventor: Cole, Barrett E., Morristown, NJ 07962-2245 (US); Higashi, Robert E., Morristown, NJ 07962-2245 (US)
(74) Representative: Buckley, Guy Julian

(57) **Abstract**

An infrared camera (100, 200) includes a lens (110, 220) to receive infrared radiation from an image (210) to be viewed. A thermal detector (120, 230) is positioned to receive the infrared radiation from the lens (110, 220) and vary the amount of light transmitted though the thermal detector responsive (120, 230) to the infrared radiation.

## Description

### Related Application

This application claims priority to United States Provisional Application serial number 61/334,490 (entitled Passive Infrared Imager, filed May 13, 2010) which is incorporated herein by reference.

### Background

Present infrared cameras can be very expensive. A lower cost camera would open up new markets and provide increased sales volume. Present uncooled bolometer camera designs are very sophisticated, achieving high performance but at a high cost. Much of the cost is the cost of the array, the readout electronics, the addressing CMOS in the array, the display electronics, and various other electronics systems such as non uniformity correction. These features are all included to achieve high performance image but at a high cost.

### Summary

An infrared camera includes a lens to receive infrared radiation from an image to be viewed. A thermal detector is positioned to receive the infrared radiation from the lens and vary the amount of light transmitted though the thermal detector responsive to the infrared radiation.

### Brief Description of the Drawings

FIG. 1 is a block diagram of an infrared detector system according to an example embodiment.
FIG. 2 is an exploded block representation of an infrared detector system according to an example embodiment.
FIG. 3 is a top view of an infrared detector system pixel supported by a mesh according to an example embodiment.
FIG. 4A is a perspective view of the pixel of FIG. 3 including more of the mesh according to an example embodiment.
FIG. 4B is an exploded perspective view of the pixel of FIG. 3 including more detail of the mesh according to an example embodiment.
FIG. 4C is a table of example pixel specifications.
FIG. 5 is a perspective view of an array of infrared detector system pixels supported by a mesh according to an example embodiment.
FIG. 6 is a cross section view of a passive IR detection system 600 according to an example embodiment.

### Detailed Description

In the following description, reference is made to the accompanying drawings that form a part hereof, and in which is shown by way of illustration specific embodiments which may be practiced. These embodiments are described in sufficient detail to enable those skilled in the art to practice the embodiments, and it is to be understood that other embodiments may be utilized and that structural, logical and electrical changes may be made. The following description of example embodiments is, therefore, not to be taken in a limited sense, and the scope is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

Various embodiments, the invention utilize a transducer that has a thermo-optical effect that causes transitions from transparent to opaque to selected frequencies of light responsive to temperature changes. By focusing infrared light, such as long wavelength infrared light (LWIR) on the transducer, the transitions may be representative of images generating the infrared light. The transducer may be directly viewed by a user where transitions are in a visible light range without the need for much of the expensive features of prior infrared cameras. In further embodiments, the transitions may be wavelengths that are not directly visible, but may be detected by a sensor such as a CMOS CCD (charge coupled device) detectors and converted to a signal which can be used to drive a user viewable display.

In one embodiment, infrared light strikes an array of an array of pixels that have an absorbing film (Si₃N₄) and a VO₂-based optical transducer. The absorbing film is a thermo-optical responsive film, such that its transmissivity to selected ranges of light changes responsive to IR radiation. Crystalline VO₂ undergoes a semiconductor metal transition at 67°C which transforms the material from transparent to reflective and opaque. By adding other metals to VO₂ the transition temperature may be lowered to 20°C, lowering the temperature of the reflective-transparent transition. The slope of the transition may also be modified to provide visual changes in the transducer representative of a wider or narrower range of temperatures.

Infrared light striking the array that is in this transition region, will heat up pixels individually depending on the intensity of light coming from the viewed target. The absorbed heat from the IR light causes the reflectance and transmission of each pixel to change in a desired wavelength range of light in response to the level of IR power received. This change can be viewed directly by a user or via an image sensor, and may be enhanced by using a backlight system similar to those used for LCD displays that projects onto a screen or eyepiece. Such a backlight should transmit list in the desired wavelength range. The array in one embodiment may be totally passive.

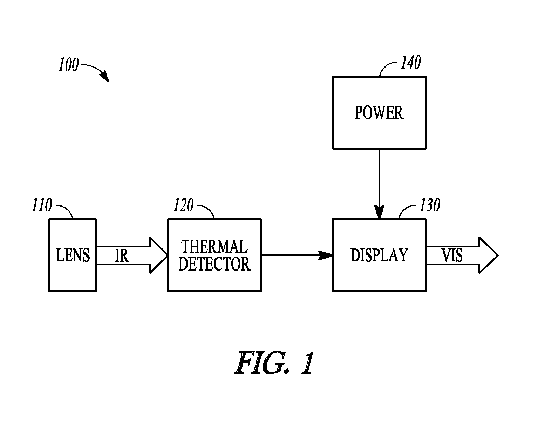

FIG. 1 is a block diagram of a passive infrared detector 100. Infrared light is received via a lens 110 and is focused on a thermal detector array 120. Thermal detector array 120 is an array of pixels having an absorbing film and optical transducer that transitions from transparent to opaque to visible light responsive to temperature changes. In some embodiments, the transducer does not transition between totally transparent or opaque to a desired wavelength range of light, such as visible light, but simply varies in the amount of light transmitted through it. By focusing infrared light, such as long wavelength infrared light (LWIR) via the lens 110 on the array 120, the transitions may be representative of images generating the infrared light. The transducer may be directly viewed by a user in the case of changes in the visible light range. In one embodiment, a display 130 is provided to enhance the images on the array. The display 130 may include a sensor to sense light either within the visible range or within another range of light not visible to user, such as light having wavelengths around 1.1µm to 1.5µm, or yet other ranges. A power block 140 is shown coupled to the display 130. In one embodiment, the optional display 130 is the only element needing power. The rest of the system 100 is passive, operating without external power.

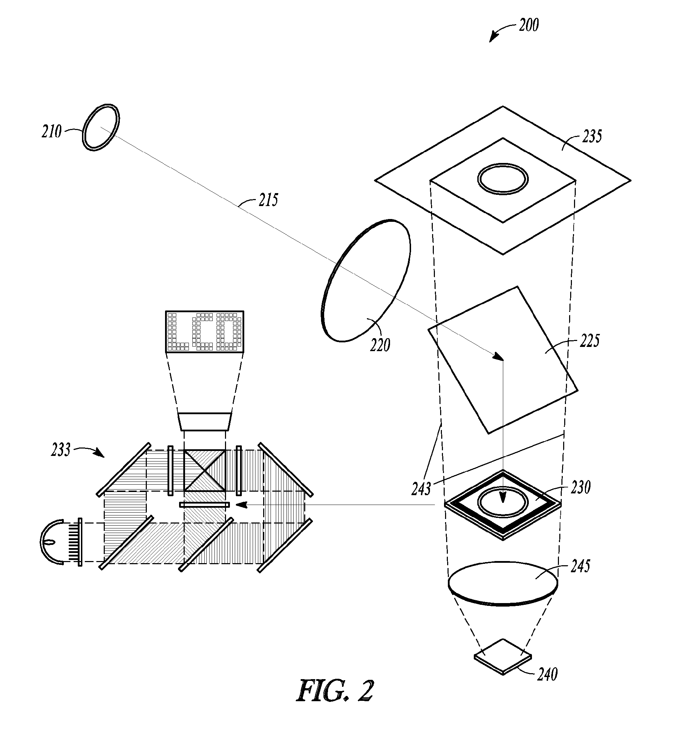

FIG. 2 is a block diagram illustrating further elements in a system 200 incorporating a passive infrared imaging system according to an example embodiment. An object 210 is illustrated as a generator of infrared radiation indicated at 215. In one embodiment, the infrared radiation is long wavelength infrared radiation that is focused by an infrared lens 220 toward a dichroic beam splitter 225, that operates in a desired range of light, such as visible to IR. Beam splitter 225 refracts the IR light onto a thermal detector array 230. Thermal detector array 230 is an array of pixels having an absorbing film and optical transducer that transitions from transparent to opaque to a desired range of light responsive to temperature changes. Thus, IR light hitting the array 230 generates a thermo-optical effect manifested as transmission changes in a desired spectrum, such as the visible spectrum. By focusing infrared light, such as long wavelength infrared light (LWIR) 215 via the lens 220 and beam-splitter 225 on the array 230, the transitions may be representative of images 233 of object 210 generating the infrared light. The array 230 may be directly viewed by a user via an eyepiece or view screen when the transmission changes are in the visible spectrum. In one embodiment, the eyepiece 235 is positioned opposite the beam splitter 225 from the array 230 such that visible light from the array 230 passes through the beam splitter 225 to the eyepiece 235.

In a further embodiment, a backlight 240 may be positioned below the array 230 and emit light 243 that is collimated via a cold lens 245 to illuminate the array 230. The collimated light passes through the array 230 to enhance the light transmitted through the beam splitter 225 to the eyepiece 235. The backlight 240 may be a DLP-like backlight and is optional. If the backlight 240 is used, it is an active element, but may utilize very little power. The rest of the IR detection system 200 may remain passive in various embodiments.

In one embodiment, the eyepiece 235 may include a CMOS CCD array to convert the light to an electronic output, which may be transmitted to a display device, also represented by block 235. The CMOS CCD array may operate in the visible range of light, or may be optimized to operate in a range corresponding to the spectrum at which transmission changes of detector array 230 are most prevalent, such as about 1.1µm to 1.5µm, or other wavelength ranges. One example array at these wavelengths include Germanium CMOS arrays pushed to 1.2µm or a pushed CMOS CCD made by hitting the array with a laser beam to increase quantum efficiency at desired wavelengths.

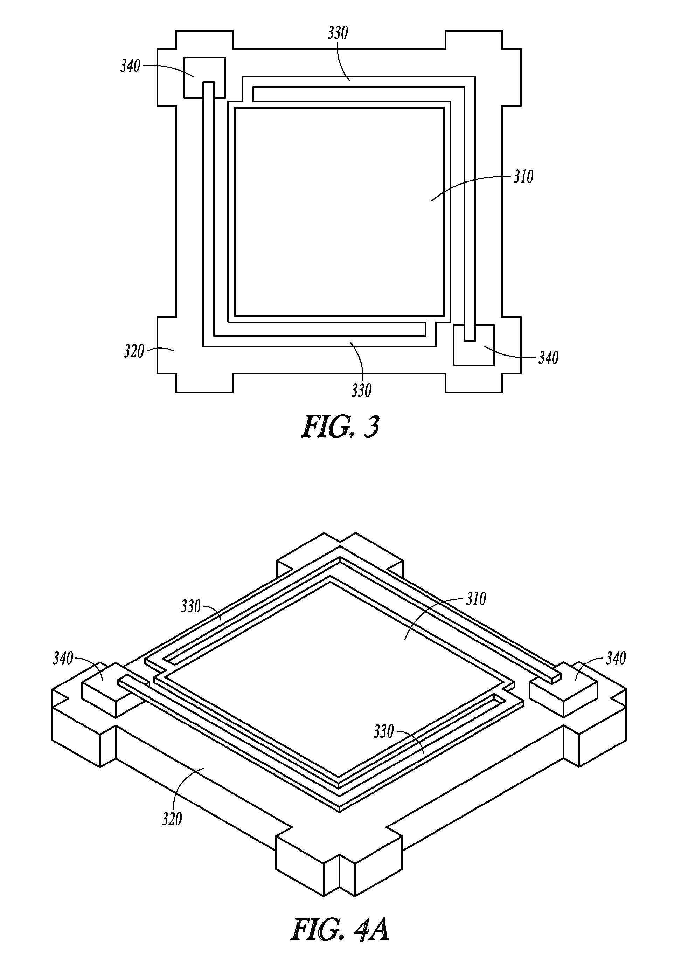

FIG. 3 is a top view of an infrared detector system pixel 310 supported by a mesh 320 according to an example embodiment. In one embodiment, the pixel 310 comprises a full coverage WₓV_{y}O₂ film and an LWIR absorber. The film supported from the mesh 320 by thermal isolation legs 330 absorbs LWIR radiation to heat the pixel, and has non-LWIR transmission. In one embodiment, the pixel film 310 has a portion with a resistance tuned to absorb LWIR radiation to optimize heating of the pixel responsive to desired wavelengths of radiation. Other portions of the pixel have regions where non-LWIR radiation transmission changes occur via the thermal changes in the WVO2 films. Non-LWIR transmission changes occur responsive to IR light due to the VO₂ "Mott" semiconductor-metal transition. Alternately, the LWIR region of the pixel can be an LWIR absorber such as gold black. The mesh 320 may be a metal mesh in one embodiment suspended over a Si etch pit to provide a thermal path and support the pixels. Thermal isolation legs 330 may be formed around the outside edges of the pixel 310 to provide for thermal isolation from other neighboring pixels. Standoff posts 340 may also be used in various embodiments. The legs 330 in one embodiment are formed of a dielectric, such as SiO₂ or Si₃N₄ for example, with no metal conductors for low thermal conductance on the order of 10⁻⁸ in some embodiments, and high thermal isolation and temperatures sensitivity (dt pix-29mK for 1K target in one embodiment).

The VO₂ film may be doped in one embodiment to change transmission at RT based on Si₃N₄ temperature change generated by IR. The RT operation and steepness of transition depend on doping VO₂ with metals such as W, Re, and Mo for example. VO₂ has a Mott semiconductor-metal transition of about 67°C. Doping with metal can reduce the edge to RT (293°K). Other dopants may also affect such transition characteristics. In one embodiment, the thermal properties maybe optimized with the use of an integral vacuum package.

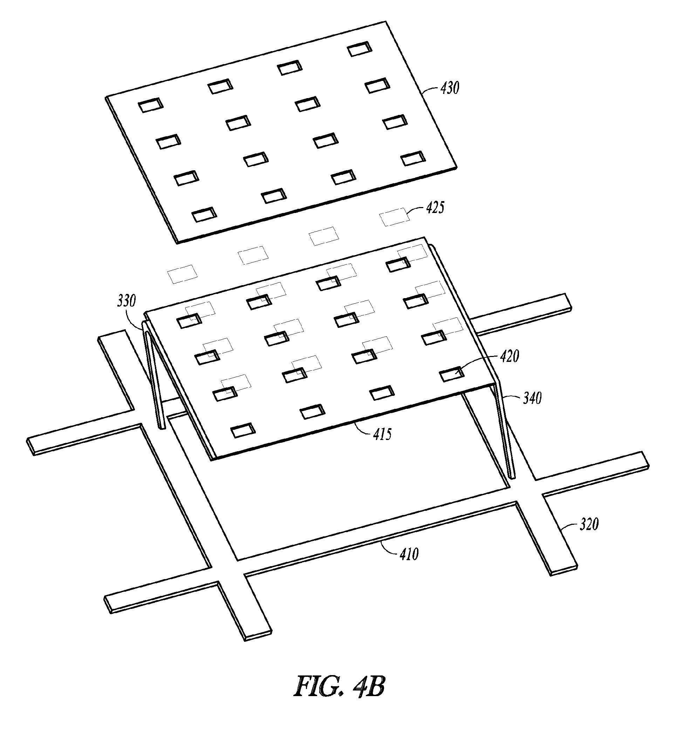

FIG. 4A is a perspective view of the pixel of FIG. 3 including more of the pixel according to an example embodiment. FIG. 4B is an exploded perspective view of the pixel of FIG. 3 including more detail of the pixel according to an example embodiment. The numbering of FIGs. 4A and 4B is consistent with that of FIG. 3. As seen in FIGs. 4A and 4B, additional structure of the metal mesh 320 is illustrated. The metal mesh forms a support structure for an array of pixels, and consists of a metal grid 410 that is used to support a thin metal pixel body 415 (approximately 5.0x10⁻⁷ cm in one embodiment) that has openings 420 corresponding to mating thermo-optic transducer elements 425. An IR absorber layer 430 is used to sandwich the transducer elements 425 between the layer 430 and the metal pixel body 415 such that the transducer elements 425 line up with the openings 420, allowing light to be transmitted through the openings as modified by the transducer elements responsive to temperature changes induced by the IR radiation.

In one embodiment, the IR absorber layer 430 has a 90 to 95% fill factor to efficiently absorb LWIR radiation and change temperature accordingly. The metal pixel body 415 is fairly thin to provide low mass and high thermal conductance to the transducer elements 425, which may be formed of VOₓ in one embodiment. The metal pixel body 415 may be reflective for shielding pixels from being adversely affected by backlight heating. Posts 340, also referred to as vias, may be formed of low conductance Si3N4, as may be the legs, for providing pixel thermal isolation.

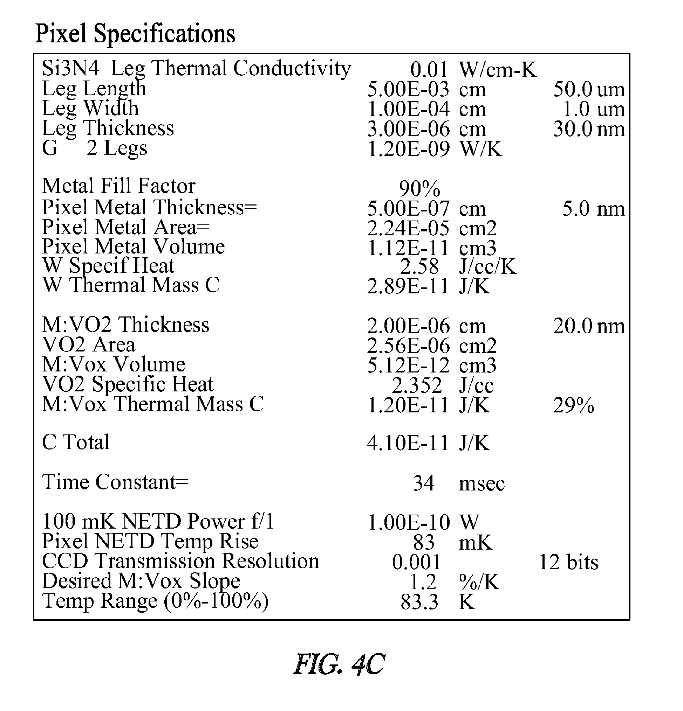

FIG. 4C is a table of example pixel specifications. Parameters may vary from the example specifications in various embodiments.

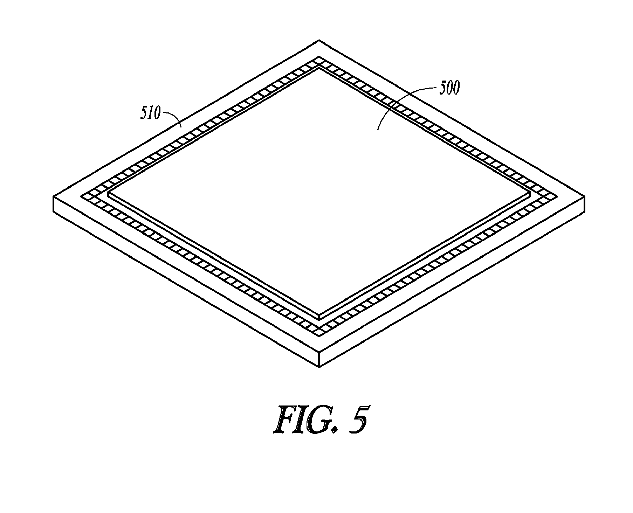

FIG. 5 is a perspective view of an array 500 of infrared detector system pixels supported by a mesh according to an example embodiment. The array of pixels supported by the mesh are formed on top of a silicon substrate 510, which as indicated above may include an etch pit for each pixel or group of pixels depending on the structure support needed for the mesh. In one embodiment, the pixels are formed of VO₂ based IR transducers to provide direct IR transduction. In further embodiments, bimorph cantilevers or Golay cell tunneling tips may be used to provide direct IR transduction.

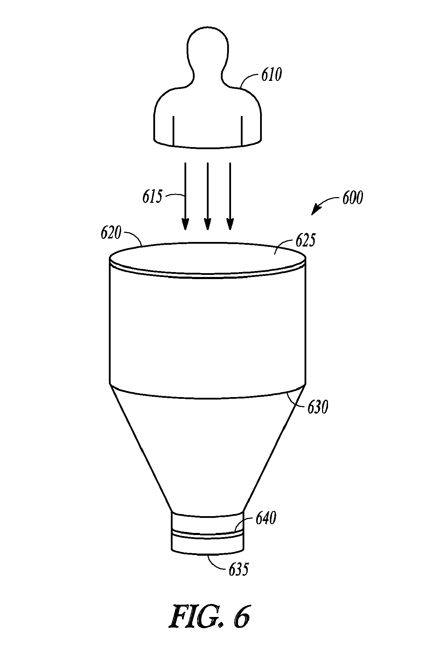

FIG. 6 is a perspective block diagram of a passive IR detection system 600 according to an example embodiment. An object, such as a person 610 emits IR radiation 615 that is received via the system 600 at a first end 620. A lens 625 disposed near or at the first end 620 is used to focus the IR radiation onto a passive transducer 630 that changes light transmissivity responsive to the IR radiation. A viewing end 635, opposite the first end 620 may include an optical lens 640 to help a user looking through the viewing end 635 toward the transducer 630 to focus on the transducer 630 in the case of visible light transmissivity changes. In one embodiment, the IR detection system 600 is fully passive, and does not require an external power source. The IR radiation effectively powers the transducer, and passive light from ambient may be used to facilitate viewing of the transducer 630 on which an image of the object appears in grayscale in one embodiment. In further embodiments, such as for use at night or in spaces without an external visible light source, an optional light source may be included. In further embodiments, viewing end 635 includes a sensor adapted to be sensitive to a range of light at least partially outside the visible range, and may also include a display device to display the sensed light to a user.

In summary, an IR detector is based on the absorption of LWIR radiation by a pixellated thermal structure. A lens projects the LWIR radiation emitted from a scene onto the pixellated array. Each pixel is heated by the absorbed IR radiation to a degree proportional to the focused LWIR intensity. High efficiency thermally isolated pixels that form the array are designed to efficiently convert the absorber LWIR power into heat and raise the pixel temperature at rates consistent with normal video frame rates.

The temperature at the pixel causes an optical transmission or reflection change in a thermo-optical material located on the pixel. The transmission change is proportional to the amount of IR radiation absorbed by each pixel in the array. The transmission change can be sensed by viewing the change directly with the naked eye when the pixel is back-illuminated with visible light. It can also be sensed by a CMOS array when the pixellated array is backlit at wavelengths where the thermal-optical effect is greatest and where the CMOS detector array has adequate sensitivity. In the latter case the CMOS array provides the ability for non-uniformity correction and for electronic readout of the converted LWIR image. One desirable thermo-optical material is VO₂ which exhibits a large transmission change at slightly elevated temperatures or a variety of VO₂ films doped with a range of dopants (W, Ti, Re) that can be used to lower the transition temperature.

## Claims

1. An infrared detector (100) comprising:
a lens (110, 220) to receive infrared radiation from an image (210) to be viewed; and
a thermal detector (120, 230) positioned to receive the infrared radiation from the lens and vary the amount of light transmitted though the thermal detector responsive to the infrared radiation.

2. The infrared detector (100) of claim 1 wherein the amount of visible light transmitted is changed such that the thermal detector (120, 230) is viewable by a user.

3. The infrared detector (100) of claim 1 and further including a backlight (240) to provide light to the thermal detector (120, 230) to increase visibility of the thermal detector by a user.

4. The infrared detector (100) of claim 3 and further comprising a collimating cold lens (245) to collimate light from the backlight to the detector (100).

5. The infrared detector (100) of claim 1 wherein the thermal detector (120, 230) comprises a mesh (320) having an array of pixels (310), each pixel including a film (420) to absorb LWIR radiation and a thermo-optical responsive film (425).

6. The infrared detector (100) of claim 5 wherein the thermo-optical responsive film (425) is a VO₂ doped with at least one of W, Re, and Mo.

7. The infrared detector (100) of claim 5 wherein the thermo-optical responsive film comprises a WₓV_{y}O₂ film.

8. An infrared detector (100) comprising:
a lens to receive infrared radiation from an image to be viewed; and
a thermal detector (120, 230) positioned to receive the infrared radiation from the lens and vary the amount of light transmitted though the thermal detector (120, 230) responsive to the infrared radiation, wherein the thermal detector (120, 230) has a mesh having an array of pixels, each pixel including a thermo-optical responsive film formed in an opening of the metal mesh and thermally insulated from the mesh.

9. The infrared detector (100) of claim 8 wherein the mesh comprises metal mesh that has a resistance such that the metal mesh absorbs LWIR radiation.

10. The infrared detector (100) of claim 8 wherein the thermo-optical responsive film includes a VO₂ film doped with at least one of W, Re, and Mo.

11. A method comprising:
focusing infrared radiation on an array of pixels (310);
heating the pixels (310) responsive to the infrared radiation; and
creating a transition of the array of pixels as a function of the heating.

12. The method of claim 11 wherein the transition of the array of pixels changes the amount of light transmitted through the array of pixels (310).

13. The method of claim 12 wherein the array of pixels (310) changes between opaque and transparent to visible light responsive to the infrared radiation.

14. The method of claim 11 and further comprising:
providing a backlight (240) to illuminate the array of pixels (310) to enhance viewing by a user; and
collimating the light provided by the backlight.

15. The method of claim 14 wherein focusing the infrared radiation on the array of pixels comprises using an IR lens and a visible-IR dichroic beam splitter (225).
